# EUROPÄISCHE PATENTSCHRIFT

(11) **EP 2 963 386 B1**
(45) Veröffentlichungstag und Bekanntmachung des Hinweises auf die Patenterteilung: **25.01.2017**
(21) Anmeldenummer: 15173063.7
(22) Anmeldetag: 22.06.2015
(51) Int. Cl.: G01C 17/04, A63B 69/00, G07C 1/24

(54) **KOMPASSANORDNUNG MIT RFID-TRANSPONDER**
COMPASS ASSEMBLY USING RFID TRANSPONDER
SYSTEME DE COMPAS DOTE DE TRANSPONDEUR RFID

(30) Priorität: 01.07.2014 DE 102014109172
(43) Veröffentlichungstag der Anmeldung: 06.01.2016
(73) Patentinhaber: SPORTident GmbH, 99310 Arnstadt (DE)
(72) Erfinder: RITTER, Siegfried, 99310 Arnstadt (DE); RAUER, Steffen, 98693 Ilmenau (DE)
(74) Vertreter: Engel, Christoph Klaus

(56) Entgegenhaltungen:
- WO-A1-2010/065886
- DE-A1- 19 646 051
- US-A- 2 885 565
- US-A1- 2012 310 533
- US-A1- 2014 156 036

## Beschreibung

Die Erfindung betrifft eine Kompassanordnung mit einem Nadelgehäuse, einer darin drehbar gelagerten, ferromagnetischen Kompassnadel und mit einer Tragplatte.

Der Kompass dient im Allgemeinen der Bestimmung einer fest vorgegebenen Richtung, insbesondere der Himmelsrichtung. Es gibt unterdessen unterschiedlichste Bauformen, die auf verschiedenen physikalischen Prinzipien beruhen. Die hier betroffene Erfindung bezieht sich generell auf einen Kompass, der eine ferromagnetische Kompassnadel verwendet, die drehbar gelagert ist und durch das Erdmagnetfeld ausgerichtet wird. Dies stellt eine einfache und preiswert herzustellende Bauart eines Kompasses dar. Entsprechende Kompassanordnungen lassen sich in großen Stückzahlen fertigen, so dass beispielsweise bei sportlichen Großveranstaltungen jedem Teilnehmer ein Kompass ausgehändigt werden kann, um während der Ausführung eines Wettkampfes auch in Bezug auf den verwendeten Kompass möglichst gleiche Bedingungen für alle Teilnehmer zu schaffen. Die hier betroffenen Kompassanordnungen werden vorzugsweise von den Teilnehmern eines Orientierungslaufes verwendet, um unter Zuhilfenahme einer Karte die aktuelle Position auf einer vorgegebenen Laufstrecke sowie die Richtung des weiteren Weges hinreichend genau bestimmen zu können.

Sogenannte Kartenkompasse besitzen neben dem eigentlichen Kompassgehäuse noch eine Tragplatte, die üblicherweise aus transparentem Material, insbesondere Kunststoff, besteht und an welcher Markierungen für die Ausrichtung der Karte relativ zum Kompass angebracht sind.

Beispielsweise ist in der DE 20 2005 006 178 U1 ein sogenannter Kompakt-Navigator beschrieben, bei welchem es sich um ein zweiteiliges Navigationsgerät aus durchsichtigen Kunststoff handelt. Zur besseren Positionierung des Kompasses auf der Karte wird dabei die Tragplatte um ein Verlängerungsteil ergänzt.

In vielen Anwendungsbereichen werden neben dem Kompass und einer geografischen Karte noch weitere Elemente vom Benutzer benötigt, um bestimmte Aufgaben in einem unbekannten Gelände zu erfüllen. Zur Lösung der spezifischen Anforderungen sind verschiedene Kombinationsgeräte bekannt geworden, die einen Kompass mit einem weiteren Mess- oder Informationsgerät kombinieren.

Aus der DE 697 10 705 T2 ist beispielsweise eine Uhr, verbunden mit einem Kompass und einem Sucher bekannt. Für eine Richtungsbestimmung verwendet die Uhr einen elektronischen Kompass, der elektrische Signale an eine elektronische Einheit liefert. Die Uhr umfasst darüber hinaus spezielle Anzeige- und Signalisierungsmittel, um einen Visiervorgang optisch und akustisch zu unterstützen. Für diese Anordnung sind komplizierte und teure elektronische Einheiten erforderlich.

Aus der DE 196 46 051 A1 sind ein Verfahren und eine Vorrichtung zum berührungslosen Erfassen der Anwesenheit einer Person an verschiedenen Kontrollstellen bekannt. Ein scheibenförmiger Aufnahmekörper trägt dafür einen Datenträger und einen Kompass. Der Kompass agiert unabhängig vom Datenträger und ist beabstandet von diesem angeordnet. Um einen Datenaustausch zwischen dem Datenträger und einer externen Basisstation zu ermöglichen, wird der Datenträger über eine Führungsvorrichtung an der Basisstation in eine Zwangslage gebracht, um nah an einer Spule der Basisstation positioniert zu werden, damit ein Datenaustausch stattfinden kann. Um die magnetische Beeinflussung des Kompasses zu verringern, muss der Datenträger möglichst weit entfernt vom Kompass platziert werden, wodurch die Gesamtgröße der Anordnung wächst. Außerdem können in dem Datenträger nur Bauelemente verwendet werden, die möglichst keine Beeinflussung des umgebenden schwachen Erdmagnetfeldes zur Folge haben. Schließlich ist die Positionierung des Datenträgers zum Austausch von Daten mit der Basisstation schwierig, so dass beispielsweise in einem Wettkampf erhebliche Zeit für den Datenaustausch benötigt wird.

Für eine drahtlose Datenübermittlung werden in unterschiedlichsten Bereichen sogenannte RFID-Transponder verwendet.

Ein bevorzugter Einsatzbereich passiver RFID-Transponder ist beispielsweise das Erfassen des Passierens von Personen oder Gegenständen an Kontrollstellen. Passive RFID-Transponder beziehen ihre Betriebsenergie aus den Funksignalen eines Abfragegerätes (Sender). Aufgrund der fehlenden eigenen Stromversorgung sind passive RFID-Transponder robuste, wartungsfreie und preiswerte Komponenten, die einen Einsatz in Massenanwendungen ermöglichen.

Die DE 10 200 4007 106 B4 zeigt eine Schaltungsanordnung für einen RFID-Transponder mit einer Empfangseinrichtung zum Empfangen eines elektrischen Steuersignals.

In der EP 1 481 366 B1 ist ein passiver RFID-Transponder beschrieben, der nach vorübergehendem Ausfall der Versorgungsspannung seinen Zustand beibehält.

Die WO 2007/015169 A2 beschreibt eine RFID-Einheit umfassend einen Speicherchip, eine auf einem Träger befestigte Antenne sowie eine auf dem Träger befestigte Fotozelle, welche mit dem Speicherchip verbunden ist und diesen mit Energie versorgt.

In zahlreichen Sportanwendungen ist ein passiver RFID-Transponder jeweils einem teilnehmenden Sportler zugeordnet. Passieren diese Sportler Kontrollstellen zugeordnete RFID-Abfragegeräte, so werden die Passierzeit und ein die Kontrollstelle kennzeichnender Ortscode erfasst. In bestimmten Anwendungen ist der Sportler verpflichtet, den erfolgten Identifikationsvorgang zu überwachen und zu kontrollieren.

Die DE 10 2012 102 941 A1 beschreibt einen passiven RFID-Transponder mit einer Kontroll- und Steuereinheit und einem Energiespeicher. Außerdem weist der Transponder eine aktivierbare Signalisierungseinrichtung auf, zum Signalisieren der Beendigung eines RFID-Arbeitszyklus über einen vorbestimmten Zeitraum.

Grundsätzlich würden sich somit RFID-Transponder besonders für die Anwendung in Bereichen eignen, in denen auch ein Kompass vom Benutzer benötigt wird. Eine unmittelbare Kombination zwischen einem Kompass und einem RFID-Transponder führt allerdings zu den oben bereits erwähnten Problemen der unerwünschten Ablenkung der Kompassnadel durch den Transponder. Insbesondere wenn der RFID-Transponder robust ausgelegt werden soll und auch eine schnelle und ungenaue Positionierung in Bezug auf ein Abfragegerät (Leseeinheit) ermöglicht werden soll, benötigt der Transponder eine relativ große Spule, die als Sende-/Empfangsantenne arbeitet und bei passiven RFID-Transpondern nicht nur die Datenkommunikation gewährleisten muss sondern gleichzeitig die zum Betrieb des Transponders erforderliche Energie aus dem magnetischen Sendefeld des Abfragegeräts umwandeln muss. Eine derartige große Spule in der Nähe eines Kompasses kann zu unerwünschten magnetischen Störungen auch in dem Zeitraum führen, in welchem der Transponder nicht aktiviert ist.

Die Aufgabe der vorliegenden Erfindung besteht somit darin, eine Kompassanordnung bereitzustellen, welche die Verwendung eines einfachen auf dem magnetischen Prinzip arbeitenden Kompasses in unmittelbarer räumlicher Nähe mit einem RFID-Transponder gestattet.

Zur Lösung der erfindungsgemäßen Aufgabe dient eine Kompassanordnung gemäß dem beigefügten Anspruch 1.

Die erfindungsgemäße Kompassanordnung zeichnet sich dadurch aus, dass die Tragplatte nicht nur den eigentlichen Kompass trägt sondern darüber hinaus eine Schaltungseinheit sowie eine Luftspule (nachfolgend vereinfacht auch Spule genannt), die gemeinsam Bestandteile eines RFID-Transponders sind. Dabei ist es wesentlich, dass die Spule, die als Sende-/ Empfangsantenne des RFID-Transponders arbeitet, konzentrisch zur Kompassnadel angeordnet ist. Die Schaltungseinheit, die keine weiteren das Magnetfeld beeinflussenden Bauelemente enthält, kann dem gegenüber abgesetzt von der Spule angeordnet sein und ist elektrisch über die Enden der Spulendrähte mit der Spule verbunden. Die Schaltungseinheit lässt sich im einfachsten Fall auf eine integrierte oder hybride Schaltung reduzieren. Insbesondere ist beim Aufbau eines passiven RFID-Transponders keine Stromversorgungsquelle erforderlich.

Gemäß einer besonders bevorzugten Ausführungsform ist eine Nut in die Tragplatte eingebracht, die umlaufend zum Kompassgehäuse verläuft und in welchen die Spule eingelegt ist. Die Spule umgreift damit die Kompassnadel konzentrisch, so dass der magnetische Einfluss der Spule, der physikalisch nicht vermeidbar ist, von allen Seiten gleichmäßig vertikal auf die Kompassnadel einwirkt, wodurch die Ausrichtung der Kompassnadel in Nordrichtung nicht verfälscht wird. Die Spule kann alternativ aber auch auf der oberen oder unteren Seite der Tragplatte aufgebracht oder konzentrisch um das Nadelgehäuse gewickelt sein. Im letzteren Fall muss das Nadelgehäuse aber in der Tragplatte fixiert sein.

Vorzugsweise besitzt die Tragplatte darüber hinaus eine Schaltungsausnehmung, in welche die Schaltungseinheit eingesetzt ist, insbesondere dauerhaft durch eine Vergussmasse gegen Umwelteinflüsse geschützt. Ebenso ist es vorteilhaft, wenn die Tragplatte eine Gehäuseaussparung besitzt, in welche das Nadelgehäuse bei der Herstellung eingesetzt und dort drehbar befestigt wird. Der eigentliche Kompass kann dann relativ zur Tragplatte gedreht werden, so dass sich Markierungen am Kompass relativ zu einer Karte ausrichten lassen, ohne dass die Tragplatte verdreht werden muss.

Gemäß einer bevorzugten Ausführungsform sind die Tragplatte und das Nadelgehäuse aus transparentem Material hergestellt, um die Kompassanordnung in Form eines Kartenkompasses zu konfigurieren. Die Kompassanordnung kann dann über eine topografische Karte gelegt werden, so dass der entsprechende Kartenabschnitt nur minimal verdeckt ist und dem Benutzer das Einnorden der Karte erleichtert wird. Insbesondere bei einer Verwendung der Kompassanordnung im Rahmen sportlicher Betätigung ist es damit möglich, dass der Benutzer die Kompassanordnung und die Karte in nur einer Hand hält und gleichzeitig damit auch der RFID-Transponder für die Anmeldung an Kontrollstationen zur Verfügung steht. Da die Spule des RFID-Transponders einen relativ großen Durchmesser aufweist, wenn sie konzentrisch um den Kompass angeordnet ist, kann auch die Kommunikationsverbindung zu einem Abfragegerät ohne eine zeitaufwändige exakte Positionierung hergestellt werden, indem die Kompassanordnung in die Nähe des Abfragegeräts gehalten wird.

Bei abgewandelten Ausführungsformen kann die Kompassanordnung auch einen aktiven RFID-Transponder umfassen, der eine eigene Stromversorgungsquelle besitzt. Dies ermöglicht es beispielsweise, optische Anzeigeelemente vorzusehen, die eine erfolgreiche Kommunikation mit dem Abfragegerät für den Benutzer optisch und gegebenenfalls auch akustisch signalisieren. Zumindest die Stromversorgungsquelle ist in diesem Fall vorzugsweise austauschbar angebracht, um nach dem Gebrauch ersetzt bzw. erneut aufgeladen zu werden.

Für eine optische Signalisierung einer erfolgreichen Datenkommunikation zwischen dem RFID-Transponder und dem externen Abfragegerät ist es besonders vorteilhaft, wenn das Licht einer an der Tragplatte angeordneten LED in die transparente Tragplatte derart eingekoppelt wird, dass es zu einer Lichtstreuung innerhalb der Tragplatte kommt, so dass dem Benutzer das optische Signal großflächig angezeigt wird.

Es ist vorteilhaft, wenn an der Tragplatte ein Halteelement angebracht ist, welches es dem Benutzer gestattet, die Kompassanordnung an seiner Hand zu befestigen. Das Halteelement kann beispielsweise durch eine Klammer oder ein Gummiband gebildet sein. Ebenso ist es zweckmäßig, wenn die Tragplatte ergonomisch geformte Abschnitte besitzt, um die Handhabung und Benutzung zu erleichtern.

Weitere Vorteile, Einzelheiten und Weiterbildungen ergeben sich aus der nachfolgenden Beschreibung bevorzugter Ausführungsformen der Erfindung unter Bezugnahme auf die Zeichnung. Es zeigen:
- Fig. 1: eine perspektivische Ansicht einer ersten Ausführungsform der erfindungsgemäßen Kompassanordnung;
- Fig. 2: eine perspektivische Ansicht einer zweiten Ausführungsform der Kompassanordnung mit einer Stromversorgungsquelle;
- Fig. 3: eine perspektivische Ansicht einer dritten Ausführungsform der Kompassanordnung mit einem gekoppelten Partner-RFID-Transponder sowie einem externen Abfragegerät.

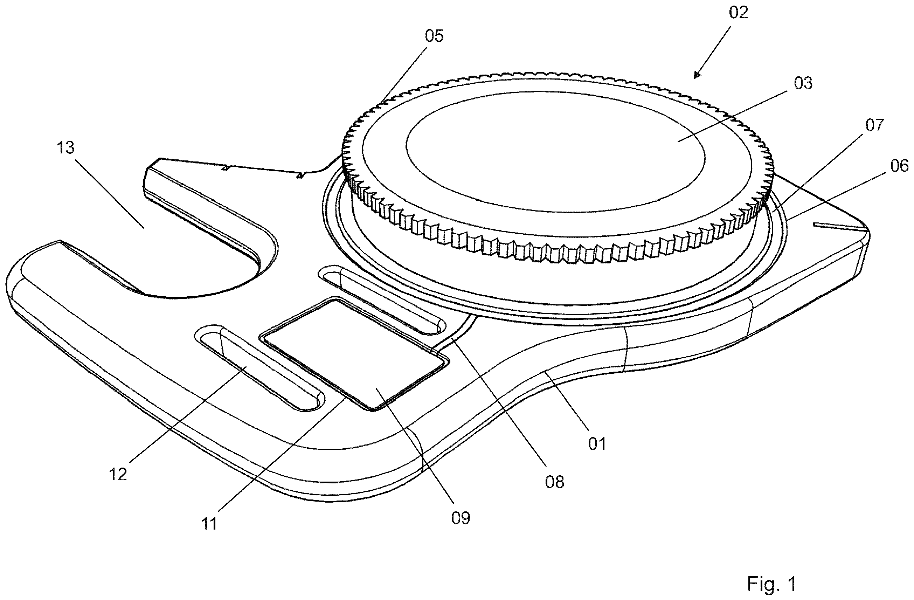

Fig. 1 zeigt in einer perspektivischen Ansicht eine erste Ausführungsform einer erfindungsgemäßen Kompassanordnung. Die Kompassanordnung umfasst eine Tragplatte 01, die bevorzugt aus einem transparenten Material, beispielsweise aus Plexiglas oder einem vergleichbaren Material besteht. In eine Gehäuseaussparung ist ein Kompass 02 eingesetzt, der ein Nadelgehäuse 03 aufweist, in welchem eine ferromagnetische Kompassnadel (nicht dargestellt) drehbar gelagert ist. Das Nadelgehäuse 03 ist vorzugsweise derart in der Tragplatte 01 befestigt, dass die ferromagnetische Kompassnadel parallel zur Ebene der Tragplatte 01 liegt, so dass sie sich am Erdmagnetfeld ausrichten kann, wenn die Tragplatte 01 im Wesentlichen horizontal positioniert ist. Am Nadelgehäuse 03 kann ein Beschriftungsring 05 angebracht sein, auf welchem die für eine optimierte Navigation gewünschten Markierungen angebracht sind. Das Nadelgehäuse 03 besteht bevorzugt wiederum aus einem transparenten Material, so dass der Benutzer eine unter dem Kompass bzw. der Tragplatte liegende Karte weiterhin erkennen kann, was das Einnorden der Karte und die Navigation für den Benutzer erleichtert.

In der Tragplatte 01 ist eine Nut 06 eingebracht, die den Kompass 02 konzentrisch umschließt. In die Nut 06 ist eine Spule 07 eingelegt, die üblicherweise aus zahlreichen Windungen eines Kupferdrahtes besteht. Die Spule 07 ist in der Nut 06 dauerhaft befestigt, beispielsweise durch ein Vergießen mit einem Harz. Der Mittelpunkt der im Wesentlichen planar gewickelten Spule 07 befindet sich damit auf der Drehachse der Kompassnadel.

Ausgehend von der Nut 06 erstreckt sich in der Tragplatte 01 ein Kabelführungsabschnitt 08, in welchem die elektrischen Anschlüsse der Spule 07 zu einer Schaltungseinheit 09 geführt sind, welche in einer Schaltungsausnehmung 11 in der Tragplatte 01 positioniert ist. Die Schaltungseinheit 09 und die Spule 07 bilden in der hier dargestellten Ausführungsform gemeinsam einen passiven RFID-Transponder, der mit einem externen Abfragegeräte 17 (Fig. 4) kommunizieren kann. Dazu muss die Spule 07 in den Empfangsbereich des Abfragegerätes gebracht werden, beispielsweise indem die Spule 07 parallel zu einer Sende-/Empfangsspule des Abfragegerätes 17 in deren Nähe platziert wird. Zwar kann die ferromagnetische Kompassnadel der beschriebenen Kompassanordnung einer magnetischen Beeinflussung während eines solchen Kommunikationsvorgangs unterzogen sein, da das Abfragegerät ein eigenes Magnetfeld erzeugt. Während der normalen Benutzung der Kompassanordnung zur Navigation im Gelände erfolgt stattdessen keine unerwünschte Ablenkung der ferromagnetischen Kompassnadel, da die magnetisch wirksame Spule 07 nicht bestromt wird und das aufgrund der Bewegung im Erdmagnetfeld entstehende Ablenkfeld minimal und senkrecht zur Kompassnadel ausgerichtet ist. Um einen Fehlereinfluss aufgrund der magnetischen Wirkungen der Spule 07 möglichst klein zu halten, sollte die Spule 07 nicht nur rotationssymmetrisch zum Kompass angeordnet sein sondern in einer Ebene liegen, die parallel zu der Ebene liegt, in welcher die Kompassnadel rotiert.

Die Tragplatte 01 besitzt bei der dargestellten Ausführungsform Befestigungsschlitze 12, an denen eine Fingerschlaufe 18 (Fig. 4) als ein Halteelement angebracht werden kann. Darüber hinaus ist eine Aussparung 13 vorgesehen, die der ergonomischen Positionierung des Fingers bzw. Daumens des Benutzers dient, wenn die Tragplatte 01 an dessen Hand befestigt ist.

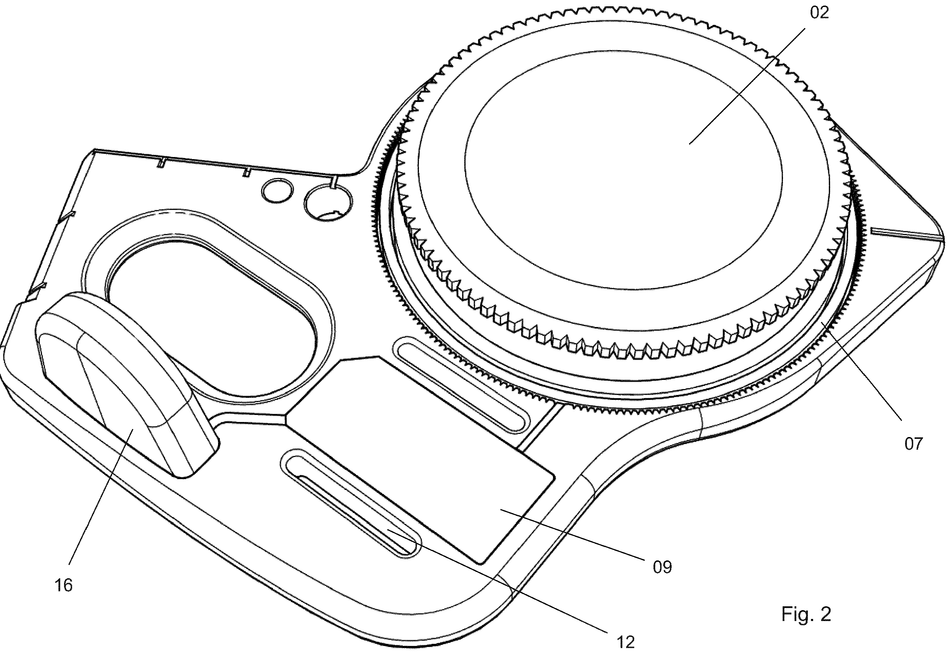

Fig. 2 zeigt eine zweite Ausführungsform der Kompassanordnung. Wie bereits in Bezug auf die Ausführungsform nach Fig. 1 beschrieben, befindet sich die Spule 07 konzentrisch zum Kompass 02, insbesondere konzentrisch zur Kompassnadel und parallel zur Rotationsebene der Kompassnadel. Die Schaltungseinheit 09 ist in dieser Ausführungsform mit größeren Abmessungen dargestellt, da sie weitere Funktionen übernimmt und dazu zusätzliche Bauteile benötigt. Abweichend von der oben beschriebenen Ausführungsform ist hier nämlich ein funktionell erweiterter RFID-Transponder realisiert, der eine eigene Stromversorgungsquelle 16 besitzt, die ebenfalls an der Tragplatte 01 befestigt ist, vorzugsweise geschützt von einem Gehäuse sowie austauschbar bzw. wieder aufladbar. Die Schaltungseinheit 09 wird von der Stromversorgungsquelle 16 versorgt, so dass zusätzliche Funktionen realisiert werden können, insbesondere eine akustische und/oder optische Anzeige einer erfolgreichen Datenkommunikation mit dem externen Abfragegerät. Insbesondere ist es für den Benutzer hilfreich, wenn eine solche erfolgreiche Datenkommunikation durch eine LED (nicht dargestellt) signalisiert wird, die ihr Licht in die transparente Tragplatte 01 einkoppelt, so dass diese großflächig leuchtet.

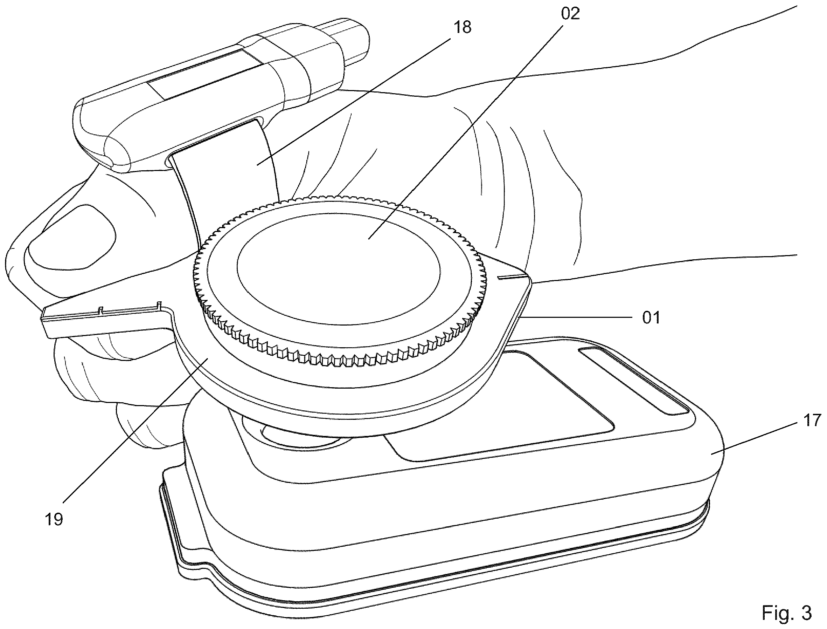

Fig. 3 zeigt eine dritte Ausführungsform der Kompassanordnung. Die Tragplatte 01 ist hier relativ klein ausgebildet. Die Spule befindet sich unter einer Abdeckung 19, wiederum konzentrisch zum Kompass 02. Die Kompassanordnung ist mithilfe der Fingerschlaufe 18 am Daumen des Benutzers befestigt. Gleichzeitig hält die Fingerschlaufe 18 einen Partner-RFID-Transponder 21, der eigenständig funktionsfähig ist und vorzugsweise als aktiver RFID-Transponder ausgeführt ist. Über Datenschlüssel sind der Partner-RFID-Transponder 21 und der in der Kompassanordnung realisierte passive RFID-Transponder miteinander gekoppelt. Im Rahmen der Datenkommunikation mit dem Abfragegerät 17 können dann spezielle Funktionen ausgeführt werden, die für den Aufbau der beschriebenen Kompassanordnung aber nicht von Bedeutung sind.

### Bezugszeichenliste

- 01 -: Tragplatte
- 02 -: Kompass
- 03 -: Nadelgehäuse
- 04 -: -
- 05 -: Beschriftungsring
- 06 -: Nut
- 07 -: Spule
- 08 -: Kabelführungsabschnitt
- 09 -: Schaltungseinheit
- 10 -: -
- 11 -: Schaltungsausnehmung
- 12 -: Befestigungsschlitz
- 13 -: Aussparung
- 14 -: Spulenabschnitt
- 15 -: -
- 16 -: Stromversorgungsquelle
- 17 -: Abfragegerät
- 18 -: Fingerschlaufe / Halteelement
- 19 -: Abdeckung
- 20 -: -
- 21 -: Partner-RFID-Transponder

## Patentansprüche

1. Kompassanordnung mit einem Nadelgehäuse (03), einer darin drehbar gelagerten, ferromagnetischen Kompassnadel und mit einer Tragplatte (01), auf welcher das Nadelgehäuse (03) befestigt ist, **dadurch gekennzeichnet, dass** die Tragplatte (01) weiterhin eine Schaltungseinheit (09) und eine Spule (07) trägt, die Bestandteile eines RFID-Transponders sind, wobei die Spule konzentrisch zur Kompassnadel angeordnet ist.

2. Kompassanordnung nach Anspruch 1, **dadurch gekennzeichnet, dass** in der Tragplatte (01) eine das Nadelgehäuse (03) umlaufende Nut (06) eingebracht ist, in welcher die Spule (07) eingelegt ist.

3. Kompassanordnung nach Anspruch 1 oder 2, **dadurch gekennzeichnet, dass** in der Tragplatte (01) eine Schaltungsausnehmung (11) eingebracht ist, welche die Schaltungseinheit (09) aufnimmt.

4. Kompassanordnung nach einem der Ansprüche 1 bis 3, **dadurch gekennzeichnet, dass** in der Tragplatte (01) eine Gehäuseaussparung eingebracht ist, in welcher das Nadelgehäuse (03) vorzugsweise drehbar befestigt ist.

5. Kompassanordnung nach einem der Ansprüche 1 bis 4, **dadurch gekennzeichnet, dass** die Schaltungseinheit (09) und die Spule (07) einen passiven RFID-Transponder bilden, der keine eigene Stromversorgungsquelle aufweist.

6. Kompassanordnung nach einem der Ansprüche 1 bis 4, **dadurch gekennzeichnet, dass** die Schaltungseinheit (09) eine Stromversorgungsquelle (16) und vorzugsweise ein Anzeigeelement umfasst, welches eine erfolgreiche Datenkommunikation zwischen dem RFID-Transponder und einem externen Abfragegerät (17) signalisiert.

7. Kompassanordnung nach Anspruch 6, **dadurch gekennzeichnet, dass** das Anzeigeelement eine LED ist, die Licht in die Tragplatte (01) einkoppelt, wobei die Tragplatte (01) jedenfalls teilweise aus lichtleitendem und lichtstreuendem Material besteht, um das Licht großflächig zur Anzeige zu bringen.

8. Kompassanordnung nach einem der Ansprüche 1 bis 7, **dadurch gekennzeichnet, dass** an der Tragplatte (01) ein Halteelement (18) angebracht ist, welches es dem Benutzer gestattet, die Kompassanordnung an seiner Hand zu befestigen.

9. Kompassanordnung nach einem der Ansprüche 1 bis 8, **dadurch gekennzeichnet, dass** es sich um einen Kartenkompass handelt, dessen Nadelgehäuse (03) und Tragplatte (01) aus einem transparenten Material bestehen.

10. Kompassanordnung nach einem der Ansprüche 1 bis 9, **dadurch gekennzeichnet, dass** an der Tragplatte (01) ein weiterer aktiver RFID-Transponder (21) angebracht ist, der für eine Datenkommunikation sowohl mit einem externen Abfragegerät (17) als auch mit dem durch die Schaltungseinheit (09) und die Spule (07) der Kompassanordnung gebildeten RFID-Transponder konfiguriert ist.

## Claims

1. A compass arrangement having a needle housing (03), a ferromagnetic compass needle mounted rotatably therein, and having a bearing plate (01) to which the needle housing (03) is fastened, **characterized in that** the bearing plate (01) furthermore supports a circuit unit (09) and a coil (07) which are parts of an RFID transponder, wherein the coil is arranged concentrically to the compass needle.

2. The compass arrangement according to claim 1, **characterized in that** a groove (06) running around the needle housing (03) is inserted in the bearing plate (01), in which groove the coil (07) is laid.

3. The compass arrangement according to claim 1 or 2, **characterized in that** a circuit recess (11) is inserted in the bearing plate (01), which recess receives the circuit unit (09).

4. The compass arrangement according to one of claims 1 to 3, **characterized in that** a housing recess is inserted in the bearing plate (01), in which recess the needle housing (03) is preferably rotatably fastened.

5. The compass arrangement according to one of claims 1 to 4, **characterized in that** the circuit unit (09) and the coil (07) form a passive RFID transponder which does not have its own current supply source.

6. The compass arrangement according to one of claims 1 to 4, **characterized in that** the circuit unit (09) comprises a current supply source (16) and preferably a display element which signals a successful data communication between the RFID transponder and an external interrogation device (17).

7. The compass arrangement according to claim 6, **characterized in that** the display element is an LED which injects light into the bearing plate (01), wherein the bearing plate (01) in each case partly comprises light-conducting and light-diffusing material, in order to display the light over large surfaces.

8. The compass arrangement according to one of claims 1 to 7, **characterized in that** a retaining element (18) is attached to the bearing plate (01), which retaining element allows the user to fasten the compass arrangement to their hand.

9. The compass arrangement according to one of claims 1 to 8, **characterized in that** it is a map compass, the needle housing (03) and bearing plate (01) whereof are made of a transparent material.

10. The compass arrangement according to one of claims 1 to 9, **characterized in that** a further active RFID transponder (21) is attached to the bearing plate (01), which RFID transponder is configured for a data communication both with an external interrogation device (17) and also with the RFID transponder formed by the circuit unit (09) and the coil (07) of the compass arrangement.

## Revendications

1. Agencement de boussole avec un boîtier à aiguille (03), une aiguille de boussole ferromagnétique, logée pouvant tourner dedans et avec une plaque de support (01) sur laquelle le boîtier à aiguille (03) est fixé, **caractérisé en ce que** la plaque de support (01) porte en plus une unité de circuit (09) et une bobine (07), qui sont les composants d'un transpondeur d'identification par radiofréquence (IRF), la bobine étant disposée concentriquement à l'aiguille de boussole.

2. Agencement de boussole selon la revendication 1, **caractérisé en ce qu'**une rainure (06) entourant le boîtier à aiguille (03) est aménagée dans la plaque de support (01) dans laquelle la bobine (07) est insérée.

3. Agencement de boussole selon la revendication 1 ou 2, **caractérisé en ce qu'**un évidement de circuit (11) est aménagé dans la plaque de support (01), lequel loge l'unité de circuit (09).

4. Agencement de boussole selon l'une quelconque des revendication 1 à 3, **caractérisé en ce qu'**une cavité de boîtier est aménagé dans la plaque de support (01), dans laquelle le boîtier à aiguille (03) est fixé de préférence pouvant tourner.

5. Agencement de boussole selon l'une quelconque des revendications 1 à 4, **caractérisé en ce que** l'unité de circuit (09) et la bobine (07) forment un transpondeur IRF passif, qui ne comporte aucune source propre d'alimentation en courant.

6. Agencement de boussole selon l'une quelconque des revendications 1 à 4, **caractérisé en ce que** l'unité de circuit (09) comprend une source d'alimentation en courant (16) et de préférence un élément d'affichage, lequel signale une communication de données réussie entre le transpondeur IRF et un appareil d'appel externe (17).

7. Agencement de boussole selon la revendication 6, **caractérisé en ce que** l'élément d'affichage est une DEL qui injecte la lumière dans la plaque de support (01), la plaque de support (01) étant à chaque fois en partie composée d'un matériau conduisant et dispersant la lumière pour apporter sur une grande surface la lumière pour l'affichage.

8. Agencement de boussole selon l'une quelconque des revendications 1 à 7, **caractérisé en ce qu'**un élément de fixation (18) est monté sur la plaque de support (01), lequel permet l'utilisateur de fixer l'agencement de boussole sur sa main.

9. Agencement de boussole selon l'une quelconque des revendications 1 à 8, **caractérisé en ce qu'**il s'agit d'une boussole cartographique, dont le boîtier à aiguille (03) et la plaque de support (01) sont composés d'un matériau transparent.

10. Agencement de boussole selon l'une quelconque des revendications 1 à 9, **caractérisé en ce qu'**un autre transpondeur IRF actif (21) est monté sur la plaque de support (01), qui est configuré pour une communication de données tant avec un appareil d'appel externe (17) qu'avec le transpondeur IRF formé avec l'unité de circuit (09) et la bobine (07) de l'agencement de boussole.
